# EUROPÄISCHE PATENTSCHRIFT

(11) **EP 1 203 524 B1**
(45) Veröffentlichungstag und Bekanntmachung des Hinweises auf die Patenterteilung: **28.07.2004**
(21) Anmeldenummer: 01124006.6
(22) Anmeldetag: 09.10.2001
(51) Int. Cl.: A01D 41/12

(54) **Vorrichtung zur Erhöhung des Fassungsvermögens für den Korntank eines Mähdreschers**
Device for increasing the capacity of the grain tank of a combine
Dispositif d'augmentation de la capacité du réservoir à grain d'une moissonneuse-batteuse

(30) Priorität: 02.11.2000 DE 10054255
(43) Veröffentlichungstag der Anmeldung: 08.05.2002
(73) Patentinhaber: Case Harvesting Systems GmbH, 01844 Neustadt (DE)
(72) Erfinder: Förster, Michael, Dipl.-Ing., 02625 Bautzen (DE); Knobel, Carsten, Dipl.-Ing., 02625 Bautzen (DE)
(74) Vertreter: Müller, Lutz

(56) Entgegenhaltungen:
- EP-A- 0 819 371
- DE-A- 4 120 731
- DE-A- 4 445 933
- DE-C- 4 333 558
- US-A- 5 151 064

## Beschreibung

Die Erfindung betrifft eine Vorrichtung zur Erhöhung des Fassungsvermögens für den Korntank eines Mähdreschers, die auf dessen Oberseite angebracht ist und durch Aufwärtsbewegungen von Wandungen dessen Fassungsvermögen wahlweise erhöht, mit den Merkmalen nach dem Oberbegriff des Patentanspruchs 1.

Korntanks für Mähdrescher müssen einerseits ein sehr großes Fassungsvermögen haben, um die Häufigkeit ihrer Entleerung in Transportfahrzeuge zu minimieren. Dazu sind zumindest die Korntanks von Großmähdreschem auf ihrer Oberseite mit Zusatzwandungen ausgestattet, die im Bedarfsfall nach oben gestellt werden können und dadurch das Fassungsvermögen vergrößern. Diese im Feldeinsatz nützliche Einrichtung muß aber bei der Straßenfahrt des Mähdreschers wieder abgesenkt werden, weil ansonsten das in der Straßenverkehrszulassungsordnung festgelegte Höhen- bzw. auch Breitenmaß überschritten würde.

Ebenso verhält es sich beim Transport eines Mähdreschers mit der Eisenbahn, wo vorgeschriebene Bahnprofile beachtet werden müssen. Dafür gibt es bereits eine Vielzahl von unterschiedlichen Ausführungsvarianten.

Die DE 41 20 731 A1 zeigt beispielsweise einen Korntank, auf dessen oberer Wandung in Fahrtrichtung gesehen links und rechts nach oben schwenkende Klappen angebracht sind, die an ihren Unterseiten starr an ihnen befestigte Stirnbleche aufweisen, die innen an der vorderen und hinteren Stirnwand des Korntanks anliegen. Diese Stirnbleche übertragen die von zwei Hubzylindern auf die Klappen und damit auf sie selbst übertragene Bewegung auf Deckbleche, die in vertikal ausgerichteten und an der vorderen und der hinteren Stirnwand des Korntanks angebrachten Geradführungen verschiebebeweglich aufgenommen sind. An dieser Vorrichtung ist einmal zu bemängeln, daß das synchrone Ausheben auf beiden Seiten praktisch nur schwer zu realisieren ist, so daß ein Verklemmen der Deckbleche die logische Folge ist. Die Notwendigkeit von zwei Hubzylindern erhöht zum anderen die Herstellungskosten dieser Vorrichtung erheblich.

Mit der DE 43 20 565 C2 ist ein weiterer Korntank bekannt geworden, auf dessen oberer Wandung auf allen vier Seiten Zusatzwandungen befestigt sind, die aus auffaltbaren Armen bestehen, um die ein einstückiges , dichtendes und insgesamt oder teilweise flexibles Flächenelement gelegt ist. Dieses Flächenelement ist an die obere Wandung des Korntanks angeschlossen und umfaßt wenigstens den Bereich des Korntanks mit dem vergrößerten Fassungsvermögen. Die oberen Enden der Arme sind mit einem rechteckigen Rahmen verbunden, der von Stellmitteln getragen wird und an dem das flexible Flächenelement mit seiner anderen Seite befestigt ist. Nachteilig an dieser Vorrichtung ist, daß die auffaltbaren Arme recht stabil ausgebildet sein müssen, weil das flexible Flächenelement dazu keinen Beitrag leisten kann. Damit die auffaltbaren Arme im Bewegungsablauf auch weitestgehend synchron aufgestellt werden können, müssen auch die Stellmittel relativ stabil im Aufbau sein. Beide Fakten haben sich als Kosten erhöhende Faktoren in der Herstellung einer derartigen Vorrichtung herausgestellt. Außerdem ist die Lebensdauer dieser Vorrichtung durch die hohe Belastung des flexiblen Flächenelements zu gering.

In der DE 43 33 558 C1 ist eine weitere Vorrichtung zur Erhöhung des Fassungsvermögens eines Korntanks beschrieben, wobei auf den in Fahrtrichtung des Mähdreschers gesehenen linken und rechten oberen Wandung des Komtanks zweiteilige Klappen angeordnet sind, deren Teile über Gelenke miteinander verbunden sind. Jede der beiden Klappen ist selbst über Gelenke an der oberen Wandung des Korntanks befestigt. Die inneren Teile der Klappen überlappen sich so weit, daß der Korntank in der ausgehobenen Stellung der Klappen noch verschlossen ist. Im Bereich der vorderen und der hinteren Stirnwand des Komtanks sind je zwei höhenverschwenkbare Stirnbleche angeordnet, die an ihrer Oberseite mit den Klappen und an ihrer Unterseite mit an der vorderen und der hinteren Stirnwand gehaltenen Koppeln gelenkig verbunden sind. Die gesamte Vorrichtung wird durch Unterstützung von zwei Gasfedern mit Hand ausgehoben. Damit sich der Bewegungsablauf synchron gestaltet, sind die vorderen Enden der Koppeln über eine gleitende Bolzen-Langloch-Führung miteinander verbunden. Ein Mangel dieser Vorrichtung ist, daß die Stirnbleche in der eingeschwenkten Stellung keinen Platz für Längsträger innerhalb des Korntanks zu dessen Versteifung lassen. Weiterhin neigt die Bolzen-Langloch-Führung zu Verklemmungen, was die Leichtgängigkeit beim Bewegen der Klappen und der Stirnbleche beeinträchtigt. Dieser Mangel ist um so stärker ausgeprägt, je kleiner der Winkel zwischen den beiden Koppeln wird. Dadurch ist das Hochschwenken der Klappen und auch die Erhöhung des Fassungsvermögens des Korntanks begrenzt.

Eine weitere Möglichkeit zur Erhöhung des Fassungsvermögens für den Korntank eines Mähdreschers ist in der DE 44 45 933 A1 beschrieben, bei der ebenfalls auf der oberen Wandung des Korntanks in Fahrtrichtung gesehen links und rechts je eine rechteckförmige Klappe hochschwenkbar angebracht ist. An den Unterseiten der Klappen sind im Bereich ihrer vorderen und hinteren Enden Bleche in der Form von gleichschenkligen Dreiecken verschwenkbeweglich befestigt, die als Einfaltdreiecke fungieren. Diese Einfaltdreiecke sind mit ihren Hypotenusen über Scharniere mit Stirnblechen verbunden, die auf der oberen Wandung des Korntanks über dessen vorderer und hinterer Stirnwand ebenfalls verschwenkbar angebracht sind und die eine trapezförmige Gestalt aufweisen.

Ein als Linearmotor ausgebildeter Antrieb ist mit einer Klappe über einen Hebelarm direkt verbunden und ein weiterer Hebelmechanismus überträgt diese Bewegung auf die Klappe auf der anderen Seite. Dadurch stellen sich die Klappen und die Stirnbleche gemeinsam auf bis in eine annähernd vertikale Position.

In der Rückwärtsbewegung falten sich genannte Teile wie eine "Faltschachtel" zusammen. Der Mangel dieser Vorrichtung ist, daß die Hebelmechanismen zur synchronen Übertragung der Bewegung relativ stabil ausgebildet sein müssen und daß sie auch nur ausschließlich zu diesem Zweck da sind. Dadurch steigen die Herstellungskosten auf eine nicht mehr zu vertretende Höhe.

Abschließend wäre noch auf die Vorrichtung zur Erhöhung des Fassungsvermögens eines Korntanks nach der EP 0 819 371 A1 hinzuweisen, bei der auch auf der oberen Wandung des Korntanks in Fahrtrichtung gesehen rechts und links schwenkbare Klappen angeordnet sind. Eine Klappe ist im Bereich der vorderen und hinteren Stirnwand des Komtanks mit nach unten gerichteten und starr mit ihr verbundenen Stirnblechen ausgestattet, die einstückig ausgebildet sind. Die Oberkanten der Stimbleche überragen die Klappe in einer nach unten gekrümmten Form und erstrecken sich bis unter die Klappe auf der anderen Seite, so daß sie als Auflage für die zweite Klappe fungieren. Auch die zweite Klappe ist analog wie die erste Klappe mit Stirnblechen ausgestattet, die jedoch aus mehreren Stirnwandteilen zusammengesetzt ist, die sich fächerförmig öffnen und schließen können. Ein Linearmotor greift über einen Hebelarm an der ersten Klappe an, die durch ihre Aushubbewegung die auf ihren Stirnblechen aufliegende zweite Klappe mit aushebt bzw. absenkt. Die Nachteile dieser Vorrichtung sind, daß auch hier nicht genügend Platz zum Einbau eines Längsträgers zur Versteifung des Korntanks zur Verfügung steht, da diesen die Stirnbleche benötigen. Das bedeutet, daß dazu andere Kosten steigernde Maßnahmen ergriffen werden müssen, um den Korntank ausreichend stabil auszubilden. Gleichermaßen wirkt sich die zumindest stabile Ausgestaltung der ersten Klappe aus, da die das Gewicht der zweiten Klappe ständig tragen muß. Ein weiterer Mangel ist, daß die Übertragung der Bewegung beim Öffnen und Schließen der Klappen nur über Gleitführungen erfolgt, die generell schwergängig sind. Die Folge davon ist, daß die Antriebselemente Kosten steigernd überdimensioniert werden müssen.

Deshalb liegt der Erfindung die Aufgabe zugrunde, eine Vorrichtung zur Erhöhung des Fassungsvermögens für den Korntank eines Mähdreschers zu schaffen, die leichtgängig zu bewegen ist, die im Inneren des Korntanks noch genügend Platz für Versteifungselemente des Korntanks läßt und die kostengünstig herstellbar ist.

Diese Aufgabe wird gemäß der Erfindung mit den Merkmalen nach dem Patentanspruch 1 gelöst, wobei in den Unteransprüchen Merkmale aufgeführt sind, die diese Lösung in vorteilhafter Weise weiterentwickeln.

Durch das Verschwenken von den über den Seitenwänden des Korntanks angebrachten Klappen von einer etwa horizontalen Lage in eine aufgerichtete Position ist die Erhöhung des Fassungsvermögens des Korntanks auf diesen beiden Seiten auf einfache und bekannte Weise gelöst. Das gleiche Ergebnis wird auf den beiden anderen Seiten über der vorderen und der hinteren Stirnwand des Korntanks dagegen erfindungsgemäß so erreicht, indem die Freiräume zwischen den an den Unterseiten der Klappen angebrachten Stirnblechen zumindest in jeder ihrer Position über der oberen Wandung des Korntanks durch speziell ausgebildete Deckbleche verschlossen werden.

Dazu bestehen die Deckbleche aus einem rechten und einem linken Teil, die symmetrisch um die Mittellängsachse des Korntanks angeordnet sind, wobei sie einerseits die Stirnbleche teilweise so überdecken, daß die sich im volumenvergrößerten Teil des Korntanks befindenden Körner nicht nach außen entweichen können. Andererseits sind ihre oberen und sich im Bereich der Mittellängsachse des Korntanks befindenden Enden in einer überlappenden Position über eine Drehachse miteinander verbunden. Weiterhin stehen die Teile der Deckbleche mit den Stirnblechen über je ein Drehgelenk in Verbindung. Dadurch wird die Bewegung der Klappen während des Hochschwenkens bzw. des Absenkens über die Stirnbleche auf die linken und rechten Teile der Deckbleche übertragen. Damit deren Bewegung auch tatsächlich so ausgeführt wird, daß sich ihre benachbarten seitlichen Stirnflächen zumindest im Bereich über der oberen Wandung des Korntanks immer überlappen und ihre Vorderkanten bei der Abwärtsbewegung der Klappen einen sich ständig vergrößernden Öffnungswinkel einschließen, muß wenigstens das rechte oder das linke Teil jedes Deckblechs auf einer speziellen Bewegungsbahn geführt werden. Dieser Bewegungsablauf zur Realisierung der Überlappung ist wegen der Körnerdichtheit zwingend erforderlich und die Bewegung der Vorderkanten voneinander weg bringt den notwendigen Platz zum Anbringen eines Versteifungselements im Inneren des Korntanks in der Nähe seiner oberen Wandung. Zur Erzeugung des Bewegungsweges für alle Teile der Vorrichtung zur Erhöhung des Fassungsvermögens ist ein Antriebsmittel vorgesehen, auf das später näher eingegangen wird.

Damit sich der Bewegungsablauf der linken und rechten Teile der Deckbleche auch wie vorstehend beschrieben gestaltet, hat es sich in einer Ausfuhrungsvariante als zweckmäßig erwiesen, an ihren unteren Bereichen in einem Drehpunkt je eine Koppel anzubringen, die sich von da an in einer horizontalen Ausrichtung von der Mittellängsachse des Korntanks weg erstreckt, wenn sich die Klappen in ihrer aufgerichteten Position befinden. Die anderen Enden der Koppeln sind in schwenkbeweglichen Lagerungen aufgenommen, die an der vorderen und der hinteren Stirnwand des Korntanks befestigt sind. Diese Anordnung bewirkt, daß die Teile der Deckbleche zumindest im Bereich über der oberen Wandung des Korntanks auf jeden Fall überlappt bleiben und mit zunehmender Abwärtsbewegung der Klappen von den Koppeln unten im Korntank auseinander gezogen werden.

In einer weiteren bevorzugten Ausführungsvariante ist es auch möglich, die Koppeln durch Kurvenbahnen zu ersetzen, in denen Rollen laufen, wobei es unerheblich ist, ob die Kurvenbahnen an den linken und rechten Teilen der Deckbleche oder an der vorderen und der hinteren Stirnwand des Komtanks angebracht sind. Entscheidend ist aber deren Form, da sie ausgehend von der aufgerichteten Position der Klappen nach unten zeigende und sich von der Mittelachse des Korntanks entfernende Krümmungen haben müssen.

Eine dritte Ausführungsvariante ist ebenso möglich, indem die die oberen Enden der linken und rechten Teile der Deckbleche miteinander verbindenden Drehachsen mit Rollen ausgestattet sind, die in an der vorderen und der hinteren Stirnwand befestigte und sich in Richtung der Mittellängsachse des Korntanks erstreckende Geradführungen hinein ragen. Bei dieser Kinematik werden die Teile der Deckbleche bei der Abwärtsbewegung der Klappen von den Drehgelenken der Stirnbleche unten auseinander gezogen.

Da die Bewegung sämtlicher Teile der Vorrichtung zur Erhöhung des Fassungsvermögens des Korntanks ausschließlich über leichtgängige Scharniere, Gelenke oder in Kurvenbahnen bzw. Geradführungen laufende Rollen erfolgt, bietet es sich an, als Antriebsmittel nur einen einzigen Linearmotor einzusetzen. Das ist auch noch deshalb möglich, weil alle Teile auf der linken und der rechten Seite kinematisch miteinander verbunden sind.

Damit wäre ein Vorteil der Erfindung deren leichtgängige Bewegung von der volumenvergrößerten Position in die abgesenkte und umgekehrt. Weiterhin bleibt im Inneren des Korntanks noch Platz für ein Versteifungselement an der wirksamsten Stelle und die vergleichsweise einfach aufgebaute Vorrichtung einschließlich ihres Antriebs ist außerdem noch kostengünstig herstellbar.

Die Erfindung soll nun anhand eines Ausführungsbeispiels näher erläutert werden, wobei die einzelnen Figuren zeigen:
- Fig. 1:: eine Draufsicht auf den Korntank mit geschlossenen und teilweise ausgebrochenen Klappen
- Fig. 2:: ein Schnitt A- A nach Fig. 1
- Fig. 3:: ein Schnitt A- A nach Fig. 1, aber mit den Klappen in der aufgerichteten Position

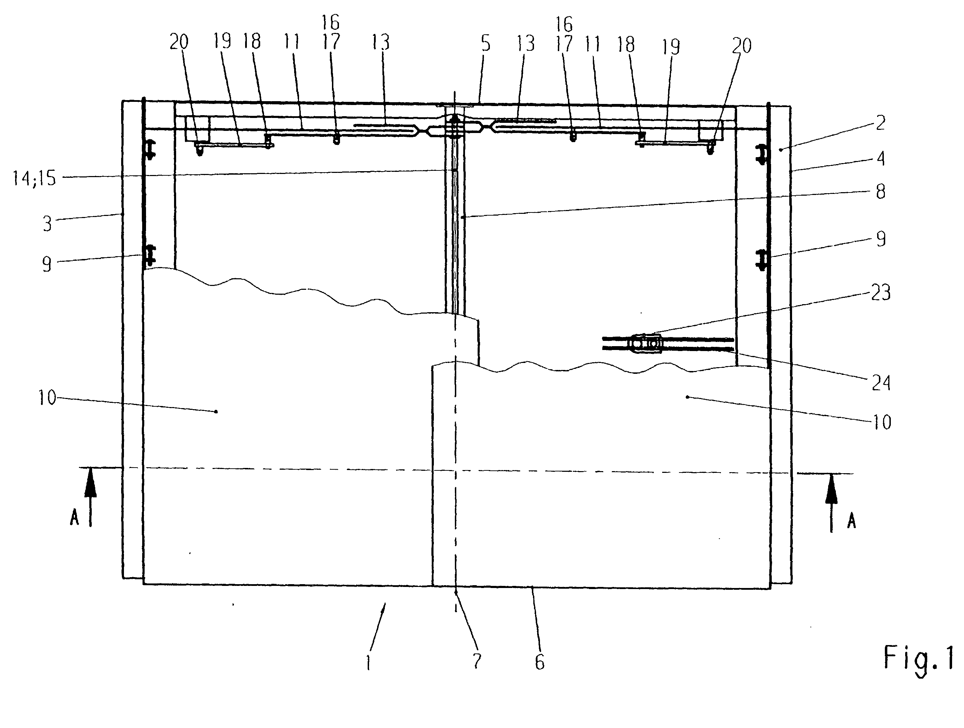

In Figur 1 ist der Korntank 1 eines Mähdreschers von oben zu sehen, der in dem Fall einen rechteckigen Querschnitt aufweist, dessen Breite größer als seine Längserstreckung in Fahrtrichtung gesehen ist. Er hat eine stabil ausgebildete obere Wandung 2, die die obere Begrenzung für die linke Seitenwand 3 und die rechte Seitenwand 4 sowie für die vordere Stirnwand 5 und die hintere Stirnwand 6 darstellt. Zwischen der vorderen Stirnwand 5und der hinteren Stirnwand 6 erstreckt sich ein in Richtung der Mittellängsachse 7 des Korntanks 1 ausgerichteter stabiler Längsträger 8.

Oberhalb der linken Seitenwand 3 und der rechten Seitenwand 4 sind mittels Scharnieren 9 zwei den Komtank 1 abdeckende Klappen 10 angebracht, die sich in ihrer annähernd horizontalen Lage im Bereich der Mittellängsachse 7 ein Stück überdecken und in der aufgerichteten Position eine Öffnung nach oben frei lassen. An den Unterseiten der Klappen 10 sind nach unten zeigende Stirnbleche 11 starr befestigt, die sich in der unmittelbaren Nähe der inneren Wandungen der vorderen Stirnwand 5 und der hinteren Stirnwand 6 befinden. Sie sind jedoch nur so lang ausgebildet, daß sie selbst in der horizontalen Lage der Klappen 10 noch zwischen ihren Vorderkanten 12 einen beträchtlichen Freiraum aufweisen.

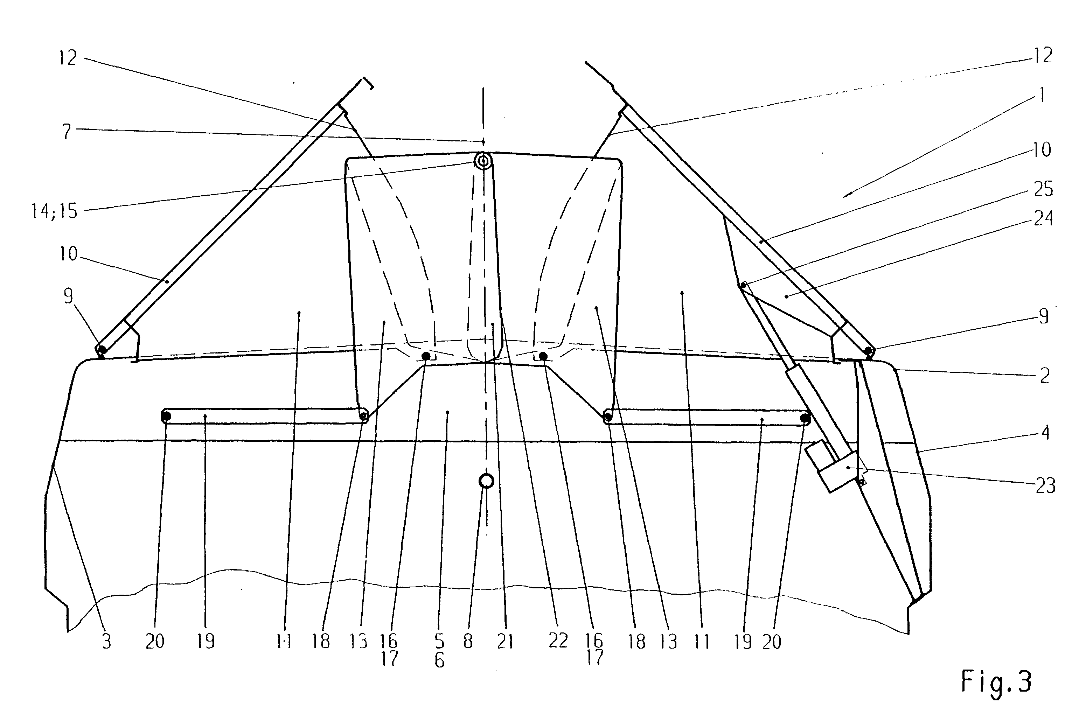

Diese Freiräume werden, wie es in Figur 3 gezeigt ist, von Deckblechen 13 in der hoch geschwenkten Position der Klappen 10 und der Stirnbleche 11 völlig abgedeckt. Diese Deckbleche 13 bestehen aus einem rechten und einem linken Teil, die symmetrisch um die Mittellängsachse 7 des Korntanks 1 angeordnet sind. Ihre oberen sich überlappenden Enden sind in einem auf der Mittellängsachse 7 liegenden Punkt über eine Drehachse 14 miteinander verbunden, die aus Stabilitätsgründen von einer durchgehenden Welle 15 gebildet wird, die vom Deckblech 13 an der vorderen Stirnwand 5 des Korntanks 1 bis zum Deckblech 13 an seiner hinteren Stirnwand 6 reicht. In einem sich deutlich unter der Drehachse 14 befindenden Punkt sind die Teile der Deckbleche 13 mit den von ihnen zumindest teilweise überdeckten Stimblechen 11 über je ein Drehgelenk 16 verbunden, das durch einen einfachen und am jeweiligen Teil des Deckbleches 13 befestigten Bolzen 17 besteht, der in ein Loch im Stirnblech 11 ragt. Die Lage der Drehgelenke 16 seitens der Stimbleche 11 befindet sich an deren unteren Enden nahe ihrer Vorderkanten 12 und seitens der Teile der Deckbleche 13 zumindest in deren unteren Hälften.

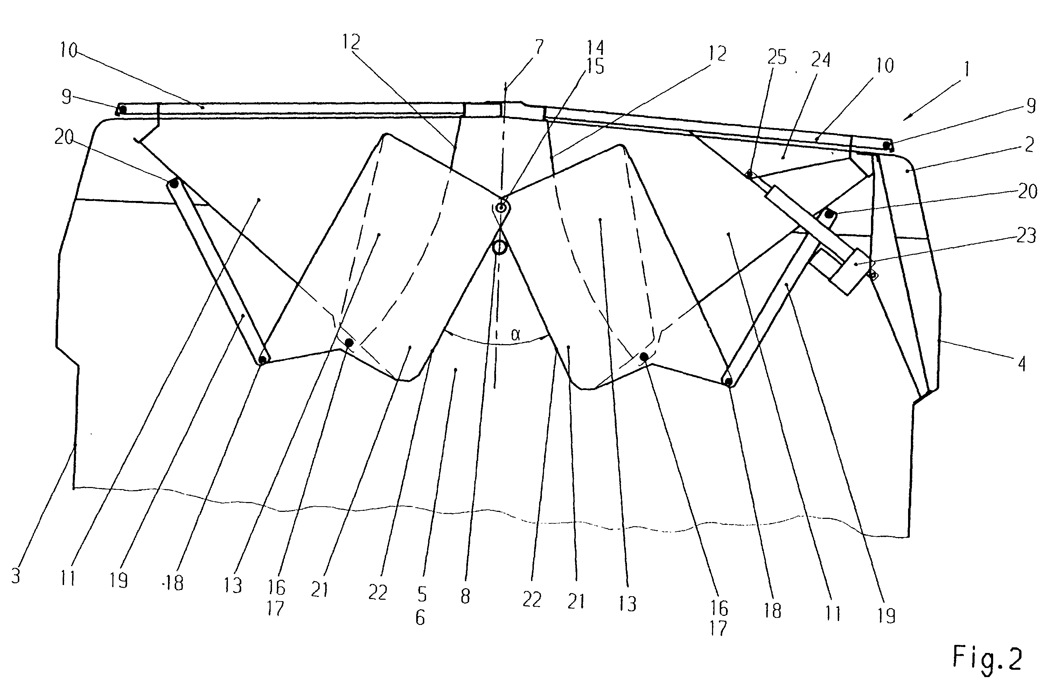

Zur Erzeugung einer Bewegungsbahn der linken und rechten Teile der Deckbleche 13 von der in der Figur 2 gezeigten Position in die nach Figur 3 und umgekehrt ist in diesem Ausführungsbeispiel noch jedes Teil der Deckbleche 13 in einem ein Stück unter dem Drehgelenk 16 angebrachten Drehbolzen 18 gelenkig mit einer Koppel 19 verbunden. Die Koppeln 19 sind symmetrisch zur Mittellängsachse 7 des Korntanks 1 angeordnet und mit ihren den Drehbolzen 18 gegenüber liegenden Enden in Lagerungen 20 an seiner vorderen Stirnwand 5 und seiner hinteren Stirnwand 6 aufgenommen, wobei sich die Koppeln 19 in der zur Volumenvergrößerung aufgerichteten Position nach Figur 3 in einer horizontalen Ausrichtung erstrecken. Eine derart ausgebildete Kinematik ermöglicht es, daß sich die seitlichen Stirnflächen 21 der linken und der rechten Teile der Deckbleche 13 in jeder Position über der oberen Wandung 2 des Korntanks 1 im Bereich ihrer Vorderkanten 22 überdecken, und daß ihre Vorderkanten 22 bei der Abwärtsbewegung in die Position nach Figur 2 einen sich ständig vergrößernden Öffnungswinkel "α" einschließen.

Als Antriebsmittel für die hier beschriebene Kinematik der Klappen 10 mit den Stirnblechen 11 sowie die linken und die rechten Teile der Deckbleche 13 findet ein Linearmotor 23 Anwendung, der sich einenends an der rechten Seitenwand 4 des Korntanks 1 abstützt und der anderenends an der in Fahrtrichtung gesehenen rechten Klappe 10 angreift, wofür an dieser speziell dafür eine Lasche 24 mit einem Gelenkpunkt 25 angeschweißt ist.

Dabei befindet sich der Gelenkpunkt 25 in einem solchen Abstand von der Schwenkachse der Scharniere 9 der rechten Klappe 10, daß ein ausreichend großer Hebelarm für den Linearmotor 23 zur Verfügung steht.

### Bezugszeichenaufstellung

- 1: Korntank
- 2: obere Wandung
- 3: linke Seitenwand
- 4: rechte Seitenwand
- 5: vordere Stirnwand
- 6: hintere Stirnwand
- 7: Mittellängsachse
- 8: Längsträger
- 9: Scharnier
- 10: Klappe
- 11: Stirnblech
- 12: Vorderkante
- 13: Deckblech
- 14: Drehachse
- 15: Welle
- 16: Drehgelenk
- 17: Bolzen
- 18: Drehbolzen
- 19: Koppel
- 20: Lagerung
- 21: seitliche Stirnfläche
- 22: Vorderkante
- 23: Linearmotor
- 24: Lasche
- 25: Gelenk
- α: Öffnungswinkel

## Patentansprüche

1. Vorrichtung zur Erhöhung des Fassungsvermögens für den Korntank eines Mähdreschers, bestehend aus:
◆ auf der oberen Wandung (2) des Komtanks (1) über dessen in Fahrtrichtung gesehenen linken und rechten Seitenwand (3;4) schwenkbeweglich anordbaren Klappen (10), die durch einen Bewegungsweg erzeugende Antriebsmittel von einer etwa horizontalen Lage in eine aufgerichtete Position schwenkbar sind,
◆ an den Unterseiten der Klappen (10) starr befestigten und nach unten zeigenden Stirnblechen (11), die sich in unmittelbarer Nähe der vorderen Stirnwand (5) sowie der hinteren Stirnwand (6) des Korntanks (1) befinden und zwischen denen aufgrund ihres seitlichen Abstands voneinander ein Freiraum vorhanden ist,
◆ einem den Freiraum zwischen den Stirnblechen (11) zumindest im Bereich über der oberen Wandung (2) des Korntanks (1) abdeckenden Deckblech (13), das mit den Stirnblechen (11) bewegungsmäßig verbunden ist,
**dadurch gekennzeichnet, daß**
a) die Deckbleche (13) aus einem rechten und einem linken Teil bestehen, die symmetrisch um die Mittellängsachse (7) des Korntanks (7) angeördnet sind und dabei einerseits die Stirnbleche (11) zumindest teilweise überdecken,
b) die oberen Enden der linken und rechten Teile der Deckbleche (13) andererseits in einer sich überlappenden Position über eine Drehachse (14) miteinander verbunden sind,
c) die linken und rechten Teile der Deckbleche (13) mit den Stirnblechen (11) über je ein Drehgelenk (16) verbunden sind,
d) wenigstens die linken oder die rechten Teile der Deckbleche (13) in einer Bewegungsbahn geführt sind, so daß sich ihre benachbarten seitlichen Stirnflächen (21) zumindest im Bereich über der oberen Wandung (2) des Korntanks (1) in jeder Position der Klappen (10) überlappen und daß ihre Vorderkanten (22) bei der Abwärtsbewegung der Klappen (10) bis zu deren annähernd horizontalen Lage einen sich ständig vergrößernden Öffnungswinkel (α) einschließen.

2. Vorrichtung nach Anspruch 1, **dadurch gekennzeichnet, daß** die linken und die rechten Teile der Deckbleche (13) mit je einer an ihrem unteren Bereich angreifenden Koppel (19) über einen Drehbolzen (18) gelenkig verbunden sind, deren gegenüber liegende Enden in Lagerungen (20) an der vorderen und der hinteren Stirnwand (5;6) des Korntanks (1) aufgenommen sind, wobei sich die Koppeln (19) in der aufgerichteten Position der Klappen (10) in einer horizontalen Ausrichtung erstrecken.

3. Vorrichtung nach Anspruch 1, **dadurch gekennzeichnet, daß** die linken und die rechten Teile der Deckbleche (13) mit ihrem unteren Bereich mit der vorderen und der hinteren Stirnwand (5;6) des Korntanks (1) über in Kurvenbahnen geführte Rollen in Verbindung stehen, wobei die Kurvenbahnen ausgehend von der aufgerichteten Position der Klappen (10) nach unten zeigende und von der Mittelachse (7) des Korntanks (1) sich entfernende Krümmungen aufweisen.

4. Vorrichtung nach Anspruch 1, **dadurch gekennzeichnet, daß** die die oberen Enden der linken und rechten Teile der Deckbleche (13) miteinander verbindenden Drehachsen (14) mit Rollen ausgestattet sind, die in an der vorderen und der hinteren Stirnwand (5;6) befestigte und sich in Richtung der Mittellängsachse (7) des Korntanks (1) erstreckende Geradführungen hinein ragen.

5. Vorrichtung nach den Ansprüchen 1 bis 4, **dadurch gekennzeichnet, daß** das den Bewegungsweg der Klappen (10), der Stirnbleche (11) und damit auch der linken und rechten Teile der Deckbleche (13) erzeugende Antriebsmittel ein Linearmotor (23) ist, der sich einenends an einer Seitenwand (3;4 ) des Korntanks (1) abstützt und der anderenends mit einer an einer Klappe (10) befestigten Lasche (24) in einem Gelenkpunkt (25) verbunden ist, wobei sich der Gelenkpunkt (25) in der Lasche (24) im Abstand eines Hebelarms von der Schwenkachse der Scharniere (9) für die Klappen (10) befindet.

6. Vorrichtung nach den Ansprüchen 1 bis 5, **dadurch gekennzeichnet, daß** sich im Bereich der oberen Wandung (2) des Korntanks (1) zwischen seiner vorderen Stirnwand (5) und seiner hinteren Stirnwand (6) ein stabiler Längsträger (8) erstreckt.

## Claims

1. An arrangement for increasing the capacity of the grain bin of a combine harvester, consisting of:
◆ on the upper wall (2) of the grain bin (1) above its left and right side walls (3,4), viewed in its direction of travel, flaps (10) are arranged so that they can swing, which can be swung from an approximately horizontal position into a raised position by means of a drive unit for producing a movement path,
◆ on the undersides of the flaps (10) rigidly fixed and downwards pointing end plates (11), which are located in the immediate vicinity of the front end wall (5) and of the rear end wall (6) of the grain bin (1) and between which because of their lateral distance from each other a space is present,
◆ a cover plate (13) covering the space between the end plates (11) at least in the region above the upper wall (2) of the grain bin (1), which is connected to the end plates (11) so that it can move,
**characterised in that**,
a) the cover plates (13) consist of a right and a left part, which are arranged symmetrically about the central longitudinal axis (7) of the grain bin (1) and cover the end plates (11) at least partly,
b) the upper ends of the left and right parts of the cover plates (13) on the other hand are joined to each other in an overlapping position by means of a hinge pin (14),
c) the left and right parts of the cover plates (13) are joined to the end plates (11) each via a rotary joint (16),
d) at least the left and right parts of the cover plates (13) are guided in a movement path, so that their adjoining lateral end surfaces (21) at least in the region above the upper wall (2) of the grain bin (1) overlap in every position of the flaps (10) and that their front edges (22) during the downwards movement of the flaps (10) down to their approximately horizontal position enclose a constantly increasing angle of opening (α).

2. An arrangement in accordance with claim 1, **characterised in that**, the left and right parts of the cover plates (13) are joined together via a pivot pin (18) to a connecting rod (19) engaging with their lower region, the opposing ends of which are held in bearings (20) on the front and the rear end wall (5,6) of the grain bin (1), where the connecting rods (19) in the raised position of the flaps (10) extend in a horizontal orientation.

3. An arrangement in accordance with claim 1, **characterised in that**, the left and right parts of the cover plates (13) with their lower region are connected with the front and the rear end wall (5,6) of the grain bin (1) by means of rollers guided in a curved track, where the curved tracks starting out from the raised position of the flaps (10) exhibit curves running downwards and away from the central longitudinal axis (7) of the grain bin (1).

4. An arrangement in accordance with claim 1, **characterised in that**, the hinge pins (14) which join the left and right parts of the cover plates (13) to each other are equipped with rollers, which project up into straight guides fixed to the front and rear end wall (5;6) and extend in the direction of the central longitudinal axis (7) of the grain bin (1).

5. An arrangement in accordance with claims 1 to 4, **characterised in that**, the drive unit which produces the path of movement of the flaps (10), the end plates (11) and hence also the left and right parts of the cover plates (13) is a linear motor (23), which abuts at one end on a side wall (3;4) of the grain bin (1) and which at the other end connects with an articulation point (25) on a bracket (24) which is attached to a flap (10), where the articulation point (25) in the bracket (24) is located at the distance of a lever arm from the turning axis of the hinges (9) for the flaps (10).

6. An arrangement in accordance with claims 1 to 5, **characterised in that**, a sturdy longitudinal girder (8) extends in the region of the upper wall (2) of the grain bin (1) between its front end wall (5) and its rear end wall (6).

## Revendications

1. Dispositif pour augmenter la contenance de la trémie d'une moissonneuse-batteuse comprenant :
◆ des clapets (10) pivotables disposés sur la paroi (2) supérieure de la trémie (1) sur les parois latérales gauches et droites de celle-ci (3 ; 4) vues dans le sens de la marche, clapets qui peuvent pivoter grâce à un moyen d'entraînement produisant une trajectoire pour passer d'une position quasi-horizontale à une position redressée ;
◆ des tôles d'extrémité (11) orientées vers le bas et fixées rigidement aux parties inférieures des clapets (10), qui se trouvent à proximité immédiate de la tôle d'extrémité avant (5) et de la tôle d'extrémité arrière (6) de la trémie (1) et entre lesquelles il y a un espace vide en raison de leur distance latérale,
◆ une coiffe (13) qui recouvre l'espace vide entre les tôles d'extrémité (11) au moins dans la zone située au-dessus de la paroi (2) supérieure de la trémie (1), qui est reliée aux tôles frontales (11) conformément au mouvement,
**caractérisé en ce que**
a) les coiffes (13) se composent d'une partie gauche et d'une partie droite qui sont placées symétriquement autour de l'axe longitudinal central (7) de la trémie (1) et recouvrent ainsi ― du moins partiellement - les tôles d'extrémité (11) d'une part,
b) les extrémités supérieures des parties gauches et droites des coiffes (13) sont reliées les unes aux autres via un axe de rotation (14) dans une position de chevauchement d'autre part,
c) les parties gauches et droites des coiffes (13) sont reliées aux tôles frontales (11) au moyen d'une charnière (16),
d) au moins les parties gauches ou droites des coiffes (13) sont guidées selon une trajectoire de manière à ce que leurs extrémités latérales voisines (21) se chevauchent dans chaque position, du moins dans la zone située au-dessus de la paroi supérieure (2) de la trémie (1) et que leurs bords avant (22) présentent une ouverture d'angle (α) qui s'agrandit constamment lors du mouvement descendant des clapets (10) jusque dans leur position quasi-horizontale.

2. Dispositif selon la revendication 1, **caractérisé en ce que** les parties gauches et droites des coiffes (13) sont reliées de manière articulée à une bielle (19) fixée à leur partie inférieure au moyen d'un pivot (18), dont les extrémités opposées sont fixées dans des logements (20) situés sur la paroi frontale avant et arrière (5;6) de la trémie (1), les bielles (19) s'étendent alors horizontalement lorsque les clapets (10) sont en position verticale.

3. Dispositif selon la revendication 1, **caractérisé en ce que** les parties gauches et droites des coiffes (13) sont reliées par leur partie inférieure à la paroi frontale avant et arrière (5;6) de la trémie (1) au moyen de rouleaux guidés dans des chemins incurvés. Dans ce contexte, les chemins incurvés présentent, à partir de la position verticale des clapets (10), des courbes orientées vers le bas et s'éloignant de l'axe longitudinal central (7) de la trémie (1).

4. Dispositif selon la revendication 1, **caractérisé en ce que** les axes de rotation (14) qui relient entre elles les extrémités supérieures des parties gauches et droites des coiffes (13) sont équipés de rouleaux qui s'insèrent dans des guidages droits fixés aux parois d'extrémité avant et arrière (5 ; 6) et s'étendant dans le sens de l'axe longitudinal central (7) de la trémie (1).

5. Dispositif selon les revendications 1 à 4, **caractérisé en ce que** le moyen d'entraînement produisant la trajectoire des clapets (10), de la tôle frontale (11) et aussi des parties droites et gauches de la coiffe (13) est un moteur linéaire (23) qui est fixé par une extrémité à une paroi latérale (3 ; 4 ) de la trémie (1) et est relié, par l'autre extrémité, à une attache (24) fixée à un clapet (10) en un point d'articulation (25), le point d'articulation (25) se trouvant sur l'attache (24) à distance d'un bras de levier de l'axe de pivotement de la charnière (9) des clapets (10).

6. Dispositif selon les revendications 1 à 5, **caractérisé en ce qu'**un longeron (8) stable s'étend entre sa paroi d'extrémité avant (5) et sa paroi d'extrémité arrière (6) dans la zone de la paroi supérieure (2) de la trémie (1).
